# EUROPEAN PATENT APPLICATION

(11) **EP 1 414 029 A2**
(43) Date of publication of application: **28.04.2004**
(21) Application number: 03023871.1
(22) Date of filing: 21.10.2003
(51) Int. Cl.: G11B 7/24, G11B 7/26

(54) **Optical recording medium and method for manufacturing the same**

(30) Priority: 22.10.2002 JP 2002307369; 14.01.2003 JP 2003005635
(71) Applicant: TDK Corporation, Chuo-ku, Tokyo 103-8272 (JP)
(72) Inventor: Inoue, Hiroyasu, Tokyo 103-827 (JP); Kakiuchi, Hironori, Tokyo 103-827 (JP); Aoshima, Masaki, Tokyo 103-827 (JP); Mishima, Koji, Tokyo 103-827 (JP)
(74) Representative: HOFFMANN - EITLE

(57) **Abstract**

An optical recording medium includes a recording layer (14) and a dielectric layer (13,15) formed in the vicinity of the recording layer and the dielectric layer contains an oxide as a primary component and being added with nitrogen. The thus constituted optical recording medium can exhibit excellent optical characteristics with respect to a laser beam of desired wavelength used for recording data and reproducing data.

## Description

### BACKGROUND OF THE INVENTION

The present invention relates to an optical recording medium and a method for manufacturing the same and, in particular, to an optical recording medium which exhibits excellent optical characteristics with respect to a laser beam of desired wavelength used for recording data and reproducing data, and a method for manufacturing the same.

### DESCRIPTION OF THE PRIOR ART

Optical recording media such as the CD, DVD and the like have been widely used as recording media for recording digital data. These optical recording media can be roughly classified into optical recording media such as the CD-ROM and the DVD-ROM that do not enable writing and rewriting of data (ROM type optical recording media), optical recording media such as the CD-R and DVD-R that enable writing but not rewriting of data (write-once type optical recording media), and optical recording media such as the CD-RW and DVD-RW that enable rewriting of data (data rewritable type optical recording media).

Data are ordinarily recorded in the ROM type optical recording medium using spirally formed pits formed in the medium substrate in the manufacturing process and data are reproduced from the medium by projecting a laser beam to pass along the spirally formed pits and detecting the amount of the reflected laser beam.

To the contrary, the write-once type optical recording medium and data rewritable type optical recording medium are constituted to record data therein by projecting a laser beam whose intensity is modulated onto a recording layer of the medium containing an organic dye or a phase change material so as to pass along a groove and/or land spirally formed on a substrate of the medium, thereby chemically and/or physically changing the organic dye or the phase change material to form record marks, and to reproduce data therefrom by projecting a laser beam onto the recording layer to pass along the spirally formed groove and/or land and detecting the amount of the reflected laser beam.

In a write-once type optical recording medium or a data rewritable type optical recording medium, a dielectric layer is generally formed in the vicinity of the recording layer, ordinarily adjacent to the recording layer, for chemically and/or physically protecting the recording layer and increasing modulation, namely, the difference between the reflection coefficient of regions of the recording layer where record marks are formed and that of regions thereof where record marks are not formed.

In the case where a dielectric layer is formed in the vicinity of the recording layer in this manner, it is preferable for the dielectric layer to have a high refractive index n for increasing modulation, namely, the difference between the reflection coefficients of a region of the recording layer where a record mark is formed and a region thereof where no record mark is formed, and it is preferable for the dielectric layer to have a low extinction coefficient k for decreasing the energy of a laser beam absorbed in the dielectric layer, thereby improving the recording sensitivity and preventing the reflection coefficient from being lowered.

However, since the refractive index n and the extinction coefficient k of a conventional dielectric layer greatly depend on the wavelength of the incident light, the refractive index n of the dielectric layer becomes low or the extinction coefficient k of the dielectric layer becomes high depending upon the wavelength of the laser beam used for recording and reproducing data and, as a result, the optical characteristics of the optical recording medium are sometimes degraded.

For example, the extinction coefficients k of some oxides among the oxides widely used for forming dielectric layers become higher with shorter laser beam wavelength and, therefore, if a dielectric layer is formed of such an oxide in a next-generation type optical recording medium in which data are recorded and reproduced using a laser beam in the blue wavelength band, it will be impossible to obtain excellent optical characteristics, namely, high modulation and high recording sensitivity.

### SUMMARY OF THE INVENTION

It is therefore an object of the present invention is to provide an optical recording medium which exhibits excellent optical characteristics with respect to a laser beam of desired wavelength used for recording data and reproducing data, and a method for manufacturing the same.

It is another object of the present invention is to provide an optical recording medium which exhibits excellent optical characteristics with respect to a laser beam in the blue wavelength band used for recording data and reproducing data and a method for manufacturing the same.

The inventors of the present invention vigorously pursued a study for accomplishing the above objects of the present invention and, as a result, made the discovery that it is possible to vary the dependency of the refractive index n and the extinction coefficient k on the wavelength of a laser beam by adding nitrogen to a dielectric layer containing an oxide as a primary component.

The present invention is based on this discovery and according to the present invention, the above and other objects can be accomplished by an optical recording medium comprising at least one recording layer and a dielectric layer formed in the vicinity of the at least one recording layer, the dielectric layer containing an oxide as a primary component and being added with nitrogen.

Since the refractive index *n* and the extinction coefficient *k* of some oxides among oxides widely used for forming a dielectric layer greatly depend on the wavelength of the incident light, the refractive index *n* of the dielectric layer becomes low or the extinction coefficient *k* of the dielectric layer becomes high depending upon the wavelength of the laser beam used for recording and reproducing data and, in particular, if a dielectric layer is formed of such an oxide in a next-generation type optical recording medium in which data are recorded and reproduced using a laser beam in the blue wavelength band, it will be impossible to obtain excellent optical characteristics. However, according to the present invention, nitrogen is added to a dielectric layer containing an oxide as a primary component, and since it is possible to vary the dependency of the refractive index *n* and the extinction coefficient *k* on the wavelength of a laser beam by adding nitrogen to a dielectric layer containing an oxide as a primary component, it is possible to form a dielectric layer having a high refractive index *n* and a low extinction coefficient *k* by controlling the amount of added nitrogen. It is therefore possible to obtain an optical recording medium which can exhibit excellent optical characteristics, namely, high modulation and high recording sensitivity with respect to a laser beam of desired wavelength used for recording data and reproducing data.

In the present invention, the dielectric layer preferably contains Ta₂O₅ or TiO₂ as a primary component. In the case where the dielectric layer contains Ta₂O₅ or TiO₂ as a primary component, when nitrogen is added to the dielectric layer, reduction in the extinction coefficient *k* is pronounced and it is therefore possible to markedly improve the recording sensitivity of the optical recording medium. Further, the refractive index *n* of the dielectric layer can be markedly increased and the extinction coefficient *k* of the dielectric layer can be prevented from increasing with respect to a laser beam in the blue wavelength band. Therefore, an optical recording medium having high modulation and high recording sensitivity can be obtained particularly when a laser beam in the blue wavelength band is employed for recording and reproducing data.

In the present invention, the preferable amount of nitrogen added to the dielectric layer varies depending upon the kind of oxide contained in the dielectric layer as a primary component and the wavelength of the laser beam used for recording and reproducing data. In the case where a laser beam in the blue wavelength band, namely, a laser beam having a wavelength λ of 380 nm to 450 nm, is used for recording and reproducing data and the dielectric layer contains Ta₂O₅ as the primary component, it is preferable to add 1 to 12 atomic % of nitrogen and more preferable to add 2 to 10 atomic % of nitrogen to the dielectric layer, and when the dielectric layer contains TiO₂ as the primary component, it is preferable to add 1 to 5 atomic % of nitrogen and more preferable to add 2 to 4 atomic % of nitrogen to the dielectric layer. The amount of nitrogen added to the dielectric layer can be measured using an ESCA (X-ray photoelectron spectroscopy: XPS).

In the present invention, in the case where the optical recording medium includes a plurality of dielectric layers each containing an oxide as a primary component, it is sufficient for at least one of the dielectric layers added with nitrogen.

In the present invention, in the case where the optical recording medium includes a plurality of dielectric layers each containing an oxide as a primary component, it is preferable for a dielectric layer located on the side of a light incidence plane with respect to an associated recording layer added with nitrogen and it is more preferable for all of the dielectric layers added with nitrogen.

In the present invention, it is preferable to record data in the recording layer using a laser beam having a wavelength of 380 nm to 450 nm. The dielectric layer containing Ta₂O₅ or TiO₂ as a primary component has a high refractive index *n* and a low extinction coefficient *k*.

In a preferred aspect of the present invention, the at least one recording layer is constituted by a first recording film containing one element selected from the group consisting of Si, Ge, Sn, Mg, C, Al, Zn, In, Cu, Ti and Bi as a primary component and a second recording film provided in the vicinity of the first recording film and containing one element selected from the group consisting of Cu, Al, Zn and Ag and different from the element contained in the first recording film as a primary component and when the laser beam is projected, the element contained in the first recording film as a primary component and the element contained in the second recording film as a primary component are mixed with each other, thereby forming a record mark.

In this specification, the statement that the first recording film contains a certain element as a primary component means that the content of the element is maximum among the elements contained in the first recording film, while the statement that the second recording film contains a certain element as a primary component means that the content of the element is maximum among the elements contained in the second recording film.

In this preferred aspect of the present invention, it is not absolutely necessary for the second recording film to be in contact with the first recording film and it is sufficient for the second recording film to be so located in the vicinity of the first recording film as to enable formation of a mixed region including the primary component element of the first recording film and the primary component element of the second recording film when the region is irradiated with a laser beam. Further, one or more other layers such as a dielectric layer may be interposed between the first recording film and the second recording film.

In a preferred aspect of the present invention, the second recording film is formed to be in contact with the first recording film.

In a preferred aspect of the present invention, the optical recording medium includes one or more recording films containing the same element as a primary component as that contained in the first recording film as a primary component or one or more recording films containing the same element as a primary component as that contained in the second recording film as a primary component.

Although the reason why a mixed region including the primary component element of the first recording film and the primary component element of the second recording film can be formed when irradiated with a laser beam is not altogether clear, it is reasonable to conclude that the primary component elements of the first and second recording films are partially or totally fused or diffused, thereby forming a region where the primary component elements of the first and second recording films mix.

In this manner, according to the preferred aspect of the present invention, when the optical recording medium is irradiated with a laser beam, since the element contained in the first recording film as a primary component and the element contained in second recording film as a primary component are mixed to each other, thereby forming a record mark whose reflection coefficient exhibiting with respect to a laser beam for reproducing data is different from those of other regions in the first recording film and the second recording film and at least a part of a region in contact with the record mark of the at least one dielectric layer is crystallized, thereby forming a crystallized region whose reflection coefficient exhibiting with respect to a laser beam for reproducing data is different from those of other regions in the at least one dielectric layer, the difference between the reflection coefficient exhibiting with respect to a laser beam for reproducing data of the region where the record mark is formed and those of other regions is considerably large and it is therefore possible to reproduce recorded data utilizing such large difference in the reflection coefficients, thereby obtaining a reproduced signal having an improved C/N ratio.

In a further preferred aspect of the present invention, a first dielectric layer is formed so as to be in contact with the first recording film and a second dielectric layer is formed so as to be in contact with the second recording film.

In a preferred aspect of the present invention, the first recording film contains an element selected from the group consisting of Si, Ge and Sn as a primary component.

In a preferred aspect of the present invention, the second recording film is added with an element selected from the group consisting of Cu, Al, Zn, Ag, Mg, Sn, Au, Ti and Pd and different from the element contained in the first recording film as a primary component.

In a further preferred aspect of the present invention, the first recording film contains an element selected from the group consisting of Si, Ge, Sn, Mg, In, Zn, Bi and Al as a primary component and the second recording film contains Cu as a primary component.

In a further preferred aspect of the present invention, the first recording film contains an element selected from the group consisting of Si, Ge, Sn, Mg and Al as a primary component.

In a further preferred aspect of the present invention, an element selected from the group consisting of Al, Si, Zn, Mg, Au, Sn, Ge, Ag, P, Cr, Fe and Ti is added to the second recording film containing Cu as a primary component.

In the case where an element selected from the group consisting of Al, Si, Zn, Mg, Au, Sn, Ge, Ag, P, Cr, Fe and Ti is added to the second recording film containing Cu as a primary component, it is possible to further decrease a noise level in a reproduced signal and improve a long term storage reliability and since the thermal conductivity of the second recording film is decreased, heat generated by a laser beam in the first recording film and the second recording film can be effectively transmitted to the at least one dielectric layer, the crystallization of the at least one dielectric layer can be facilitated.

In a further preferred aspect of the present invention, an element selected from the group consisting of Al, Zn, Sn and Au is added to the second recording film containing Cu as a primary component.

In another preferred aspect of the present invention, the first recording film contains an element selected from the group consisting of Si, Ge, C, Sn, Zn and Cu as a primary component and the second recording film contains Al as a primary component.

In a further preferred aspect of the present invention, an element selected from the group consisting of Mg, Au, Ti and Cu is added to the second recording film containing Al as a primary component.

In the case where an element selected from the group consisting of Mg, Au, Ti and Cu is added to the second recording film containing Al as a primary component, it is possible to further decrease a noise level in a reproduced signal and improve a long term storage reliability and since the thermal conductivity of the second recording film is decreased, heat generated by a laser beam in the first recording film and the second recording film can be effectively transmitted to the at least one dielectric layer, the crystallization of the at least one dielectric layer can be facilitated.

In another preferred aspect of the present invention, the first recording film contains an element selected from the group consisting of Si, Ge, C and Al as a primary component and the second recording film contains Zn as a primary component.

In a further preferred aspect of the present invention, an element selected from the group consisting of Mg, Cu and Al is added to the second recording film containing Zn as a primary component.

In the case where an element selected from the group consisting of Mg, Cu and Al is added to the second recording film containing Zn as a primary component, it is possible to further decrease a noise level in a reproduced signal and improve a long term storage reliability and since the thermal conductivity of the second recording film is decreased, heat generated by a laser beam in the first recording film and the second recording film can be effectively transmitted to the at least one dielectric layer, the crystallization of the at least one dielectric layer can be facilitated.

In another preferred aspect of the present invention, the first recording film contains an element selected from the group consisting of Si, Ge and Sn as a primary component and the second recording film contains Ag as a primary component.

In a further preferred aspect of the present invention, an element selected from the group consisting of Cu and Pd is added to the second recording film containing Ag as a primary component.

In the case where an element selected from the group consisting of Cu and Pd is added to the second recording film containing Ag as a primary component, it is possible to further decrease a noise level in a reproduced signal and improve a long term storage reliability and since the thermal conductivity of the second recording film is decreased, heat generated by a laser beam in the first recording film and the second recording film can be effectively transmitted to the at least one dielectric layer, the crystallization of the at least one dielectric layer can be facilitated.

In a preferred aspect of the present invention, the first recording film and the second recording film are preferably formed so that a total thickness thereof is 2 nm to 40 nm, more preferably, 2 nm to 30 nm, most preferably, 2 nm to 15 nm.

In a preferred aspect of the present invention, the optical recording medium comprises two or more recording layers spaced apart from each other and dielectric layers each formed in the vicinity of one the recording layers, at least the dielectric layer formed in the vicinity of the recording layer closest to a light incidence plane containing an oxide as a primary component and nitrogen as an additive.

According to this preferred aspect of the present invention, since at least the dielectric layer formed in the vicinity of the recording layer closest to a light incident plane contains an oxide as a primary component and nitrogen as an additive, the dielectric layer formed in the vicinity of the recording layer closest to a light incident plane has a high refractive index and a low extinction coefficient and it is therefore possible to markedly improve the data recording characteristic to a recording layer(s) other than the recording layer closest to a light incident plane and the data reproduction characteristic therefrom.

In a further preferred aspect of the present invention, a dielectric layer located on the side of a light incidence plane with respect to the dielectric layer formed in the vicinity of the recording layer closest to the light incidence plane contains an oxide as a primary component and nitrogen as an additive.

The above and other objects of the present invention can be also accomplished by a method for manufacturing an optical recording medium comprising at least one recording layer and a dielectric layer formed in the vicinity of the at least one recording layer, the method for manufacturing an optical recording medium comprising a step of forming the dielectric layer by vapor-phase growth of an oxide in an atmosphere of a mixed gas containing nitrogen gas.

According to the present invention, since it is possible to form a dielectric layer containing a desired amount of nitrogen by controlling the content of nitrogen contained in the mixed gas, it is possible to form a dielectric layer having a high refractive index *n* and a low extinction coefficient *k* and it is therefore possible to obtain an optical recording medium which can exhibit excellent optical characteristics, namely, high modulation and high recording sensitivity with respect to a laser beam of desired wavelength used for recording data and reproducing data.

In a preferred aspect of the present invention, the dielectric layer is formed by a sputtering process so as to contain an oxide as a primary component and nitrogen as an additive.

The above and other objects and features of the present invention will become apparent from the following description made with reference to the accompanying drawings.

### BRIEF DESCRIPTION OF THE DRAWINGS

Figure 1 is a schematic perspective view showing an optical recording medium that is a preferred embodiment of the present invention.
Figure 2 is an enlarged schematic cross-sectional view of the part of the optical recording medium indicated by A in Figure 1.
Figure 3 is an enlarged schematic cross-sectional view showing the optical recording medium of Figure 2 after recording data therein.
Figure 4 is an enlarged schematic cross-sectional view of the layer configuration of an optical recording medium which is another preferred embodiment of the present invention.
Figure 5 is a cross-sectional view showing the layer configuration of an optical recording medium which is a further embodiment of the present invention.
Figure 6 is an enlarged schematic cross-sectional view showing the optical recording medium of Figure 5 after irradiation of an L1 layer with a laser beam.
Figure 7 is a graph showing the relationship between the amount of nitrogen added to a dielectric layer and the refractive index *n* of the dielectric layer in Working Example 1.
Figure 8 is a graph showing the relationship between the amount of nitrogen added to a dielectric layer and the extinction coefficient *k* of the dielectric layer in Working Example 1.
Figure 9 is a graph showing the relationship between the wavelength of a laser beam and the refractive index *n* of a dielectric layer in Working Example 1.
Figure 10 is a graph showing the relationship between the wavelength of a laser beam and the extinction coefficient *k* of a dielectric layer in Working Example 1.
Figure 11 is a graph showing the relationship between the amount of nitrogen added to a dielectric layer and the refractive index *n* of the dielectric layer in Working Example 2.
Figure 12 is a graph showing the relationship between the amount of nitrogen added to a dielectric layer and the extinction coefficient *k* of the dielectric layer in Working Example 2.
Figure 13 is a graph showing the relationship between the wavelength of a laser beam and the refractive index *n* of a dielectric layer in Working Example 2.
Figure 14 is a graph showing the relationship between the wavelength of a laser beam and the extinction coefficient *k* of a dielectric layer in Working Example 2.

### DESCRIPTION OF THE PREFERRED EMBODIMENTS

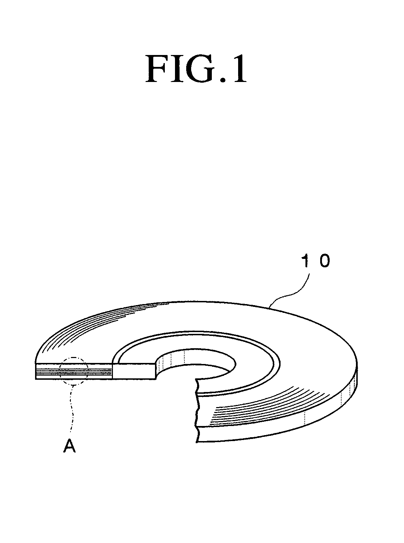

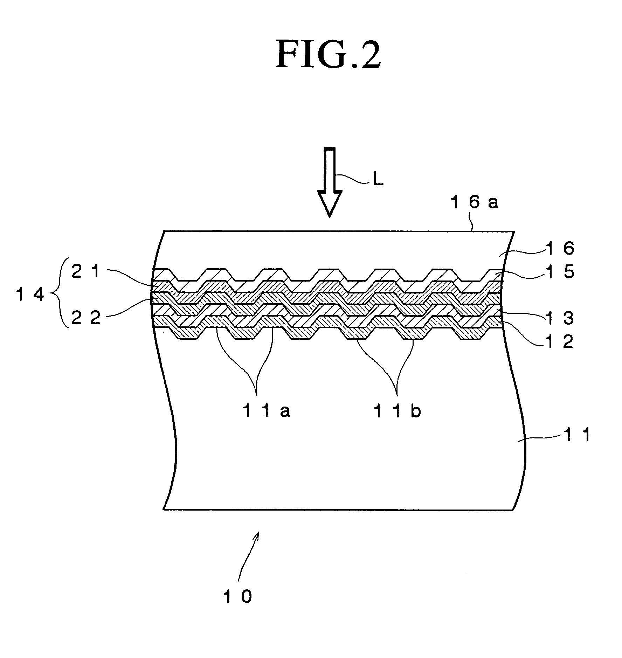

Figure 1 is a schematic perspective view showing an optical recording medium that is a preferred embodiment of the present invention and Figure 2 is a schematic enlarged cross-sectional view indicated by A in Figure 1.

The an optical recording medium 10 according to this embodiment is constituted as a write-once type optical recording medium and as shown in Figure 2, it includes a support substrate 11, a reflective layer 12 formed on the surface of the support substrate 11, a second dielectric layer 13 formed on the surface of the reflective layer 12, a recording layer 14 formed on the surface of the second dielectric layer 13, a first dielectric layer 15 formed on the surface of the recording layer 14 and a light transmission layer 16 formed on the surface of the first dielectric layer 15.

As shown in Figure 2, the recording layer 14 is constituted by a second recording film 22 formed on the surface of the second dielectric layer 13 and a first recording film 21 formed on the surface of the second recording layer 22.

In this embodiment, as shown in Figure 2, a laser beam L is projected onto a light incident surface 16a of the light transmission layer 16, thereby recording data in the optical recording medium 10 or reproducing data from the optical recording medium 10.

The support substrate 11 serves as a support for ensuring mechanical strength required for the optical recording medium 10.

The material used to form the support substrate 11 is not particularly limited insofar as the support substrate 11 can serve as the support of the optical recording medium 10. The support substrate 11 can be formed of glass, ceramic, resin or the like. Among these, resin is preferably used for forming the support substrate 11 since resin can be easily shaped. Illustrative examples of resins suitable for forming the support substrate 11 include polycarbonate resin, polyolefin resin, acrylic resin, epoxy resin, polystyrene resin, polyethylene resin, polypropylene resin, silicone resin, fluoropolymers, acrylonitrile butadiene styrene resin, urethane resin and the like. Among these, polycarbonate resin and polyolefin resin are most preferably used for forming the support substrate 11 from the viewpoint of easy processing, optical characteristics and the like.

In this embodiment, the support substrate 11 has a thickness of about 1.2 mm.

The shape of the support substrate 11 is not particularly limited but is normally disk-like, card-like or sheet-like.

In this embodiment, since a laser beam L is not transmitted through the support substrate 11 when data are recorded or to be reproduced, it is not required for the support substrate 11 to have a high light transmittance.

As shown in Figure 2, grooves 11a and lands 11b are alternately formed on the surface of the support substrate 11. The grooves 11a and/or lands 11b serve as a guide track for the laser beam L when data are recorded or when data are reproduced.

The reflective layer 12 serves to reflect the laser beam L entering through the light transmission layer 16 so as to emit it from the light transmission layer 16.

The thickness of the reflective layer 12 is not particularly limited but is preferably from 5 nm to 300 nm, more preferably from 20 nm to 200 nm.

The material used to form the reflective layer 12 is not particularly limited insofar as it can reflect a laser beam L, and the reflective layer 12 can be formed of Mg, Al, Ti, Cr, Fe, Co, Ni, Cu, Zn, Ge, Ag, Pt, Au and the like. Among these materials, it is preferable to form the reflective layer 12 of a metal material having a high reflection characteristic, such as Al, Au, Ag, Cu or alloy containing at least one of these metals, such as alloy of Al and Ti.

The reflective layer 12 is provided in order to increase the difference in reflection coefficient between a recorded region and an unrecorded region by a multiple interference effect when the laser beam L is used to reproduce data recorded in the recording layer 14, thereby obtaining a higher reproduced signal (C/N ratio).

The first dielectric layer 15 and the second dielectric layer 13 serve to protect the recording layer 14 constituted by the first recording film 21 and the second recording film 22. Degradation of data recorded in the recording layer 14 can be prevented over a long period by the first dielectric layer 15 and the second dielectric layer 13.

Each of the first dielectric layer 15 and the second dielectric layer 13 contains Ta₂O₅ or TiO₂ and is added with nitrogen.

Since the refractive index *n* and the extinction coefficient *k* of Ta₂O₅ or TiO₂ greatly depend on the wavelength of the incident light, in the case where the dielectric layer is formed of Ta₂O₅ or TiO₂, the refractive index *n* of the dielectric layer becomes low or the extinction coefficient *k* of the dielectric layer becomes high depending upon the wavelength of the laser beam used for recording and reproducing data, thereby degrading optical characteristics of the optical recording medium and, in particular, if a dielectric layer is formed of an oxide in a next-generation type optical recording medium in which data are recorded and reproduced using a laser beam in the blue wavelength band, it will be impossible to obtain excellent optical characteristics.

However, a study carried out by the inventors of the present invention revealed that it is possible to vary the dependency of the refractive index *n* and the extinction coefficient *k* on the wavelength of the laser beam by adding nitrogen to a dielectric layer containing an oxide as a primary component and that it is possible to form a dielectric layer having a sufficiently high refractive index *n* and a sufficiently low extinction coefficient *k* with respect to a laser beam of desired wavelength by controlling the amount of nitrogen added to the dielectric layer.

More specifically, it was found that the difference (*n0*- *n*) between the refractive index *n0* of a dielectric layer containing Ta₂O₅ or TiO₂ as a primary component and no nitrogen as an additive and the refractive index *n* of a dielectric layer containing Ta₂O₅ or TiO₂ as a primary component and nitrogen as an additive becomes smaller as the wavelength of a laser beam L used for recording and reproducing data is shorter and the difference (*k0- k*) between the extinction coefficient *k0* of a dielectric layer containing Ta₂O₅ or TiO₂ as a primary component and no nitrogen as an additive and the extinction coefficient *k* of a dielectric layer containing Ta₂O₅ or TiO₂ as a primary component and nitrogen as an additive becomes larger as the wavelength of a laser beam L used for recording and reproducing data is shorter. Particularly, it was found that even in the case where a laser beam L in the blue wavelength band, namely, a laser beam having a wavelength λ of 380 nm to 450 nm, is used for recording and reproducing data, it is possible to set the refractive index *n* and the extinction coefficient *k* of a dielectric layer by selecting the amount of nitrogen added to the dielectric layer so that the refractive index *n* of the dielectric layer is larger than *n0* and the extinction coefficient *k* thereof is smaller than *k0*.

A further study carried out by the inventors of the present invention revealed that the refractive index *n0* of a dielectric layer containing Ta₂O₅ as a primary component but no nitrogen as an additive greatly decreases as the wavelength of the laser beam L becomes shorter, while the refractive index *n* of a dielectric layer containing Ta₂O₅ as a primary component and a prescribed amount of nitrogen as an additive greatly increases as the wavelength of the laser beam L becomes shorter, and that the extinction coefficient *k* of a dielectric layer containing Ta₂O₅ as a primary component and a prescribed amount of nitrogen as an additive is smaller than the extinction coefficient *k0* of a dielectric layer containing Ta₂O₅ as a primary component but no nitrogen as an additive and becomes smaller as the wavelength of the laser beam L becomes shorter. It was further found by the inventors that the refractive index *n0* of a dielectric layer containing TiO₂ as a primary component but no nitrogen as an additive stays almost constant even if the wavelength of the laser beam L becomes shorter, while the refractive index *n* of a dielectric layer containing TiO₂ as a primary component and a predetermined amount of nitrogen as an additive increases as the wavelength of the laser beam L becomes shorter, and that the extinction coefficient *k* of a dielectric layer containing TiO₂ as a primary component and a prescribed amount of nitrogen as an additive is smaller than the extinction coefficient *k0* of a dielectric layer containing TiO₂ as a primary component but no nitrogen as an additive and becomes smaller as the wavelength of the laser beam L becomes shorter.

Therefore, in this embodiment, the amounts of nitrogen added to the first dielectric layer 15 and the second dielectric layer 13 are determined so that the refractive indexes *n* of the first dielectric layer 15 and the second dielectric layer 13 are sufficiently high and the extinction coefficients *k* thereof are sufficiently low when a laser beam L having a wavelength of 405 nm is used for recording and reproducing data.

The first dielectric layer 15 and the second dielectric layer 13 may be formed of the same material or of different materials.

The thickness of the first dielectric layer 15 and the second dielectric layer 13 is not particularly limited but is preferably from 3 nm to 200 nm. If the first dielectric layer 15 or the second dielectric layer 13 is thinner than 3 nm, it is difficult to obtain the above-described advantages. On the other hand, if the first dielectric layer 15 or the second dielectric layer 13 is thicker than 200 nm, it takes a long time to form the first dielectric layers 15 and the second dielectric layers 13, thereby lowering the productivity of the optical recording medium 10, and cracks may be generated in the optical recording medium 10 owing to stress present in the first dielectric layers 15 and/or the second dielectric layer 13.

The recording layer 14 is adapted for recording data therein.

In this embodiment, the recording layer 14 is constituted by the first recording film 21 and the second recording film 22 and the first recording film 21 is disposed on the side of the light transmission layer 16 and the second recording film 22 is disposed on the side of the support substrate 11.

In this embodiment, the first recording film 21 contains an element selected from the group consisting of Si, Ge and Sn as a primary component and the second recording film 22 contains Cu as a primary component.

Cu contained in the second recording film 22 as a primary component quickly mixes with the element contained in the first recording film 21 to form a record mark when irradiated with a laser beam L, thereby enabling data to be quickly recorded in the first recording film 21 and the second recording film 22.

In order to improve the recording sensitivity of the first recording film 21, one or more elements selected from a group consisting of Mg, Al, Cu, Ag and Au may be further added to the first recording film 21.

In order to improve the storage reliability and the recording sensitivity of the second recording film 22, at least one element selected from the group consisting of Al, Si, Zn, Mg and Au may be further added to the second recording film 22. The amount of the element (elements) added to the second recording film 22 is preferably equal to or more than 1 atomic % and less than 50 atomic %.

The surface smoothness of the first recording layer 31 irradiated with the laser beam L becomes worse as the total thickness of the first recording film 21 and the second recording film 22 becomes thicker. As a result, the noise level of the reproduced signal becomes higher and the recording sensitivity is lowered. On the other hand, in the case where the total thickness of the first recording film 21 and the second recording film 22 is too small, the change in reflection coefficient between before and after irradiation with the laser beam L is small, so that a reproduced signal having high strength (C/N ratio) cannot be obtained. Moreover, it becomes difficult to control the thickness of the first recording film 21 and the second recording film 22.

Therefore, in this embodiment, the first recording film 21 and the second recording film 22 are formed so that the total thickness thereof is from 2 nm to 40 nm. In order to obtain a reproduced signal having higher strength (C/N ratio) and further decrease the noise level of the reproduced signal, the total thickness of the first recording film 21 and the second recording film 22 is preferably from 2 nm to 20 nm and more preferably 2 nm to 15 nm.

The individual thicknesses of the first recording film 21 and the second recording film 22 are not particularly limited but in order to considerably improve the recording sensitivity and greatly increase the change in reflection coefficient between before and after irradiation with the laser beam L, the thickness of the first recording film 21 is preferably from 1 nm to 30 nm and the thickness of the second recording film 22 is preferably from 1 nm to 30 nm. Further, it is preferable to define the ratio of the thickness of the first recording film 21 to the thickness of the second recording film 22 (thickness of first recording film 21 / thickness of second recording film 22) to be from 0.2 to 5.0.

The light transmission layer 16 serves to transmit a laser beam L and preferably has a thickness of 10 µm to 300 µm. More preferably, the light transmission layer 16 has a thickness of 50 µm to 150 µm.

The material used to form the light transmission layer 16 is not particularly limited but in the case where the light transmission layer 16 is to be formed by the spin coating process or the like, ultraviolet ray curable resin, electron beam curable resin or the like is preferably used. More preferably, the light transmission layer 16 is formed of ultraviolet ray curable resin.

The light transmission layer 16 may be formed by adhering a sheet made of light transmittable resin to the surface of the first dielectric layer 15 using an adhesive agent.

The optical recording medium 10 having the above-described configuration can, for example, be fabricated in the following manner.

The support substrate 11 having the groove 11a and the land 11d on the surface thereof is first fabricated by injection molding using a stamper (not shown).

The reflective layer 12 is further formed on the surface of the support substrate 11.

The reflective layer 12 can be formed by a gas phase growth process using chemical species containing elements for forming the reflective layer 12. Illustrative examples of the gas phase growth processes include vacuum deposition process, sputtering process and the like.

The second dielectric layer 13 is then formed on surface of the reflective layer 12.

In this embodiment, the second dielectric layer 13 is formed by a sputtering process using a mixed gas of argon gas and nitrogen gas as sputtering gas and an oxide such as Ta₂O₅, TiO₂ or the like as a target. As a result, the second dielectric layer 13 contains an oxide such as Ta₂O₅, or TiO₂ as a primary component and is added with nitrogen. The nitrogen content of the second dielectric layer 13 is determined so that the second dielectric layer 13 has a high refractive index *n* and a low extinction coefficient *k* and the nitrogen content of the second dielectric layer 13 can be controlled by controlling the amount of nitrogen gas in the sputtering gas.

The second recording film 22 is further formed on the second dielectric layer 13. The second recording layer 22 can be also formed by a gas phase growth process using chemical species containing elements for forming the second recording film 22.

The first recording film 21 is then formed on the second recording film 22. The first recording film 21 can be also formed by a gas phase growth process using chemical species containing elements for forming the first recording film 21.

In this embodiment, since the first recording film 21 and the second recording film 22 are formed so that the total thickness thereof is from 2 nm to 40 nm, it is possible to improve the surface smoothness of the first recording film 21.

The first dielectric layer 15 is further formed on the first recording film 31.

In this embodiment, the first dielectric layer 15 is formed by a sputtering process using a mixed gas of argon gas and nitrogen gas as sputtering gas and an oxide such as Ta₂O₅, TiO₂ or the like as a target. As a result, the first dielectric layer 15 contains an oxide such as Ta₂O₅, or TiO₂ as a primary component and is added with nitrogen. The nitrogen content of the first dielectric layer 15 is determined so that the first dielectric layer 15 has a high refractive index n and a low extinction coefficient *k* and the nitrogen content of the first dielectric layer 15 can be controlled by controlling the amount of nitrogen gas in the sputtering gas.

Finally, the light transmission layer 16 is formed on the first dielectric layer 15. The light transmission layer 16 can be formed, for example, by applying an acrylic ultraviolet ray curable resin or epoxy ultraviolet ray curable resin adjusted to an appropriate viscosity onto the surface of the second dielectric layer 15 by spin coating to form a coating layer and irradiating the coating layer with ultraviolet rays to cure the coating layer.

Thus, the optical recording medium 10 was fabricated.

Data are recorded in the optical recording medium 10 of the above-described configuration, in the following manner, for example.

As shown in Figure 2, the first recording film 21 and the second recording film 22 are first irradiated via the light transmission layer 16 with a laser beam L having predetermined power.

In order to record data with high recording density, it is preferable to project a laser beam L having a wavelength λ of 450 nm or shorter onto the optical recording medium 10 via an objective lens (not shown) having a numerical aperture NA of 0.7 or more and it is more preferable that λ/NA be equal to or smaller than 640 nm.

In this embodiment, a laser beam L having a wavelength λ of 405 nm is projected onto the optical recording medium 10 via an objective lens having a numerical aperture NA of 0.85.

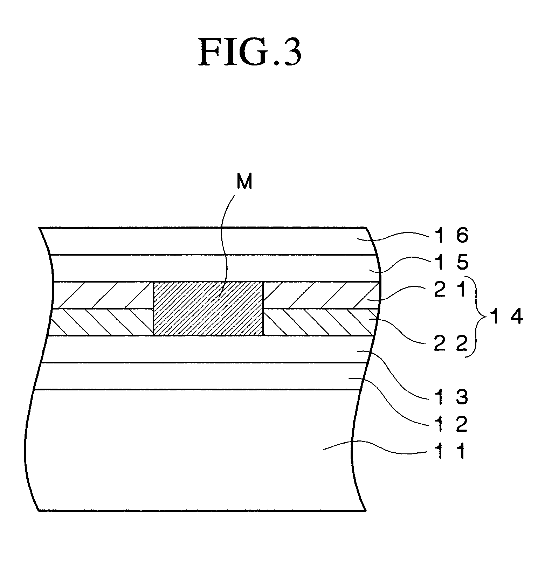

As a result, an element contained in the first recording film 21 as a primary component and an element contained in the second recording film 22 as a primary component are mixed at a region irradiated with the laser beam L and as shown in Figure 3, a mixed region composed of a mixture of the primary component element of the first recording film 21 and the primary component element of the second recording film 22 is produced and a record mark M is formed.

When the primary component elements of the first recording films 21 and 22 are mixed, whereby a record mark M is formed, the reflection coefficient of the region in which the record mark M is formed markedly changes. Since the reflection coefficient of the thus formed record mark M is therefore greatly different from that of the region surrounding the mixed region M, it is possible to obtain a high reproduced signal (C/N ratio) when optically recorded information is reproduced.

According to this embodiment, since the amounts of nitrogen added to the first dielectric layer 15 and the second dielectric layer 13 are determined so that the refractive indexes *n* of the first dielectric layer 15 and the second dielectric layer 13 are sufficiently high and the extinction coefficients k thereof are sufficiently low with respect to the laser beam L having a wavelength of 405 nm, when data are recorded in the optical recording medium 10, it is possible to decrease the energy of the laser beam L absorbed in the first dielectric layer 15 and the second dielectric layer 13 and improve the recording sensitivity of the optical recording medium 10. On the other hand, when data are reproduced from the optical recording medium 10, it is possible to increase modulation, namely, the difference in reflection coefficients between a region of the recording layer 14 where a record mark is formed and a region thereof where no record mark is formed and prevent the reflective coefficient of the recording layer 14 from decreasing.

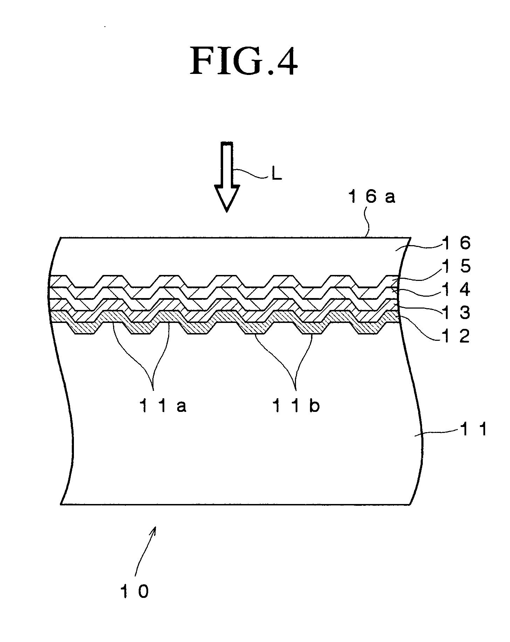

Figure 4 is a schematic cross sectional view showing a layer configuration of an optical recording medium which is another preferred embodiment of the present invention.

The optical recording medium 10 according to this embodiment is constituted as a data rewritable type optical recording medium and as shown in Figure 4, it includes a support substrate 11, a reflective layer 12 formed on the surface of the support substrate 11, a second dielectric layer 13 formed on the surface of the reflective layer 12, a recording layer 14 formed on the surface of the second dielectric layer 13, a first dielectric layer 15 formed on the surface of the recording layer 14 and a light transmission layer 16 formed on the surface of the first dielectric layer 15.

In this embodiment, a laser beam L is also projected onto a light incident surface 16a of the light transmission layer 16, thereby recording data in the optical recording medium 10 or reproducing data from the optical recording medium 10.

Each of the support substrate 11, the reflective layer 12 and the light transmission layer 16 of the optical recording medium 10 according to this embodiment serves and is constituted similarly to the corresponding one of the support substrate 11, the reflective layer 12 and the light transmission layer 16 of the optical recording medium 10 according to the previous embodiment shown in Figure 2.

Each of the first dielectric layer 15 and the second dielectric layer 13 is constituted similarly to that of the optical recording medium 10 according to the previous embodiment shown in Figure 2 and differ therefrom only in that they serve to protect the recording layer 14.

Therefore, in this embodiment, the amounts of nitrogen to be added to the first dielectric layer 15 and the second dielectric layer 13 are also determined so that the refractive indexes *n* of the first dielectric layer 15 and the second dielectric layer 13 are sufficiently high and the extinction coefficients *k* thereof are sufficiently low when a laser beam L having a wavelength of 405 nm is used for recording and reproducing data.

The recording layer 14 is adapted for recording data therein.

In this embodiment, the recording layer 14 is formed of a phase change material. Utilizing the difference in the reflection coefficients between the case where the recording layer 14 is in a crystal phase and the case where it is in an amorphous phase, data are recorded in the recording layer 14 and data are reproduced from the recording layer 14.

The material for forming the recording layer 14 is not particularly limited but a material capable of changing from an amorphous phase to a crystal phase in a short time is preferable in order to enable direct overwriting of data at a high velocity. Illustrative examples of materials having such a characteristic include a SbTe system material.

As the SbTe system material, SbTe may be used alone or a SbTe system material to which additives are added in order to shorten time required for crystallization and improve the long-term storage reliability of the optical recording medium 10 may be used.

Concretely, it is preferable to form the recording layer 14 of a SbTe system material represented by the compositional formula: 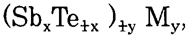 where M is an element other than Sb and Te, x is equal to or larger than 0.55 and equal to or smaller than 0.9 and y is equal to or larger than 0 and equal to or smaller than 0.25, and it is more preferable to form the recording layer 14 of a SbTe system material represented by the above mentioned compositional formula wherein x is equal to or larger than 0.65 and equal to or smaller than 0.85 and y is equal to or larger than 0 and equal to or smaller than 0.25.

While M is not particularly limited, it is preferable for the element M to be one or more elements selected from the group consisting of In, Ag, Au, Bi, Se, Al, P, Ge, H, Si, C, V, W, Ta, Zn, Mn, Ti, Sn, Pd, N, O and rare earth elements in order to shorten time required for crystallization and improve the storage reliability of the optical recording medium 10. It is particularly preferable for the element M to be one or more elements selected from the group consisting of Ag, In, Ge and rare earth elements for improving the storage reliability of the optical recording medium 10.

The optical recording medium 10 having the above-described configuration can, for example, be fabricated in the following manner.

Similarly to the optical recording medium 10 shown in Figure 2, the support substrate 11 is first fabricated and the reflective layer 12 is formed on the surface of the support substrate 11.

Then, similarly to the optical recording medium 10 shown in Figure 2, the second dielectric layer 13 is then formed on surface of the reflective layer 12.

The recording layer 14 is further formed on the second dielectric layer 13. The recording layer 14 can be also formed by a gas phase growth process using chemical species containing elements for forming the recording layer 14.

Similarly to the manner by which the first dielectric layer 15 is formed on the first recording film 31 in the embodiment shown in Figure 2, the first dielectric layer 15 is then formed on the recording layer 14.

Finally, the light transmission layer 16 is formed on the first dielectric layer 15. The light transmission layer 16 can be formed, for example, by applying an acrylic ultraviolet ray curable resin or epoxy ultraviolet ray curable resin adjusted to an appropriate viscosity onto the surface of the second dielectric layer 15 by spin coating to form a coating layer and irradiating the coating layer with ultraviolet rays to cure the coating layer.

Thus, the optical recording medium 10 shown in Figure 4 was fabricated.

Data are recorded in the optical recording medium 10 of the above-described configuration, in the following manner, for example.

As shown in Figure 2, the first layer 14 is first irradiated via the light transmission layer 16 with a laser beam L having predetermined power.

Similarly to the previous embodiment shown in Figure 2, in this embodiment, a laser beam L having a wavelength λ of 405 nm is projected onto the optical recording medium 10 via an objective lens having a numerical aperture NA of 0.85.

When a predetermined region of the recording layer 14 is heated by the irradiation with the laser beam L to a temperature equal to or higher than the melting point of the phase change material and quickly cooled, the region assumes an amorphous state. On the other hand, when a predetermined region of the recording layer 14 is heated by the irradiation with the laser beam L to a temperature equal to or higher than the crystallization temperature of the phase change material and gradually cooled, the region assumes a crystallized state.

A record mark is formed by the region in the amorphous state of the recording layer 14. The length of the record mark and the length of the blank region between the record mark and the neighboring record mark in the direction of the track constitute data recorded in the recording layer 14.

In this embodiment, since the amounts of nitrogen added to the first dielectric layer 15 and the second dielectric layer 13 are determined so that the refractive indexes *n* of the first dielectric layer 15 and the second dielectric layer 13 are sufficiently high and the extinction coefficients *k* thereof are sufficiently low with respect to the laser beam L having a wavelength of 405 nm, it is possible to decrease the energy of the laser beam L absorbed in the first dielectric layer 15 and the second dielectric layer 13 and improve the recording sensitivity of the optical recording medium 10.

On the other hand, when data recorded in the optical recording medium 10 are reproduced, the light incident plane 16a of the light transmission layer 16 is irradiated with a laser beam L whose intensity is modulated and the focus of the laser beam L is adjusted onto the recording layer 14.

Since the reflection coefficients of the recording layer 14 are different between a region in an amorphous state and a region in a crystallized state, it is possible to reproduce data recorded in the recording layer 14 by detecting the amount of the laser beam L reflected from the recording layer 14.

In this embodiment, since the amounts of nitrogen added to the first dielectric layer 15 and the second dielectric layer 13 are determined so that the refractive indexes *n* of the first dielectric layer 15 and the second dielectric layer 13 are sufficiently high and the extinction coefficients *k* thereof are sufficiently low with respect to the laser beam L having a wavelength of 405 nm, it is possible to increase modulation, namely, the difference in reflection coefficients between a region of the recording layer where a record mark is formed and a region thereof where no record mark is formed and prevent the reflective coefficient of the recording layer 14 from decreasing.

According to this embodiment, since the amounts of nitrogen added to the first dielectric layer 15 and the second dielectric layer 13 are determined so that the refractive indexes *n* of the first dielectric layer 15 and the second dielectric layer 13 are sufficiently high and the extinction coefficients k thereof are sufficiently low with respect to the laser beam L having a wavelength of 405 nm, when data are recorded in the optical recording medium 10, it is possible to decrease the energy of the laser beam L absorbed in the first dielectric layer 15 and the second dielectric layer 13 and improve the recording sensitivity of the optical recording medium 10. On the other hand, when data are reproduced from the optical recording medium 10, it is possible to increase modulation, namely, the difference in reflection coefficients between a region of the recording layer 14 where a record mark is formed and a region thereof where no record mark is formed and prevent the reflective coefficient of the recording layer 14 from decreasing.

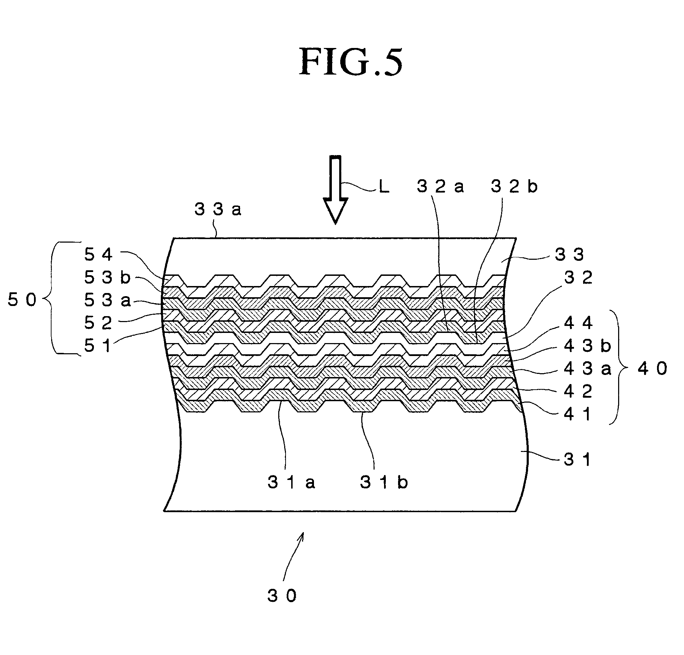

Figure 5 is a cross-sectional view showing a layer configuration of an optical recording medium which is a further embodiment of the present invention.

An optical recording medium 30 according to this embodiment is constituted as a write once type optical recording medium and as shown in Figure 5, it includes a support substrate 31, a transparent intermediate layer 32, a light transmission layer 33, an L0 layer 40 formed the support substrate 31 and the transparent intermediate layer 32 and an L1 layer 50 formed between the transparent layer 32 and the light transmission layer 33.

The L0 layer 40 and the L1 layer 50 are recording layers in which data are recorded, i.e., the optical recording medium 30 according to this embodiment includes two recording layers.

As shown in Figure 5, the L0 layer 40 constitutes a recording layer far from the light incident plane 33a and is constituted by laminating a reflective film 41, a fourth dielectric film 42, a second L0 recording film 43a, a first L0 recording film 43b and a third dielectric film 44 from the side of the support substrate 31.

On the other hand, the L1 layer 50 constitutes a recording layer close to a light incident plane 33a and is constituted by laminating a reflective film 51, a second dielectric film 52, a second L1 recording film 53a, a first L1 recording film 53b and a first dielectric film 53b from the side of the support substrate 31.

In the case where data are recorded in the L0 layer 40 and data recorded in the L0 layer 40 are reproduced, a laser beam L is projected thereon through the L1 layer 50 located closer to the light transmission layer 33.

The support substrate 31 serves as a support for ensuring mechanical strength required for the optical recording medium 30 and is constituted similarly to the support substrate 11 of the optical recording medium 10 shown in Figure 2.

The transparent intermediate layer 32 serves to space the L0 layer 40 and the L1 layer 50 apart by a physically and optically sufficient distance.

As shown in Figure 5, grooves 32a and lands 32b are alternately formed on the surface of the transparent intermediate layer 32 so as to correspond to grooves 31a and lands 31b formed on the support substrate 31. The grooves 32a and/or lands 32b formed on the surface of the transparent intermediate layer 32 serve as a guide track for the laser beam L when data are recorded in the L0 layer 40 or when data are reproduced from the L0 layer 40.

It is preferable to form the transparent intermediate layer 32 so as to have a thickness of 10 µm to 50 µm and it is more preferable to form it so as to have a thickness of 15 µm to 40 µm.

It is necessary for the transparent intermediate layer 32 to have sufficiently high light transmittance since the laser beam L passes through the transparent intermediate layer 32 when data are recorded in the L0 layer 40 and data recorded in the L0 layer 40 are reproduced.

The material for forming the transparent intermediate layer 32 is not particularly limited and an ultraviolet ray curable acrylic resin is preferably used for forming the transparent intermediate layer 32.

The light transmission layer 33 serves to transmit the laser beam L and the light incident plane 33a is constituted by one of the surfaces thereof. The light transmission layer 33 is constituted similarly to the light transmission layer 16 of the optical recording medium 10 shown in Figure 2.

The L0 layer 40 includes a first L0 recording film 43b containing an element selected from a group consisting of Si, Ge and Sn as a primary component and a second L0 recording film 43a containing Cu as a primary component.

In order to lower the noise level of a reproduced signal and improve the storage reliability of the optical recording medium 30, it is preferable to add one or more elements selected from the group consisting of Al, Zn, Sn, Mg and Au to the second L0 recording film 43a.

The L1 layer 50 includes a first L1 recording film 53b containing Si as a primary component and a second L1 recording film 53a containing Cu as a primary component.

In order to lower the noise level of a reproduced signal and improve the storage reliability of the optical recording medium 30, it is preferable to add one or more elements selected from the group consisting of Al, Zn, Sn, Mg and Au to the second L1 recording film 53a.

In this embodiment, each of the fourth dielectric film 42 and the third dielectric film 44 included in the L0 layer 40 and the second dielectric film 52 and the first dielectric film 54 contains Ta₂O₅ or TiO₂ as a primary component and nitrogen as an additive and the amount of nitrogen added to each of the first dielectric film 54, the second dielectric film 52, the third dielectric film 44 and the fourth dielectric film 42 is determined so that the refractive index n thereof is sufficiently high and the extinction coefficient k thereof is sufficiently low with respect to a laser beam L having a wavelength of 405 nm.

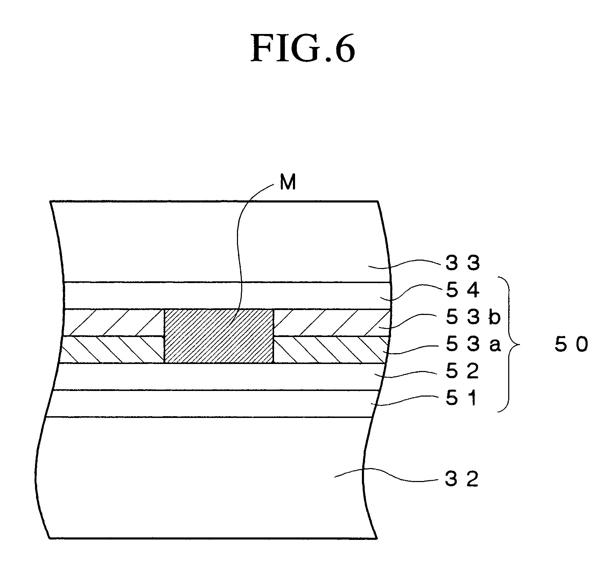

Figure 6 is a schematic enlarged cross-sectional view showing the optical recording medium 30 shown in Figure 5 after the L1 layer 50 was irradiated with a laser beam L.

As shown in Figure 6, when the L1 layer 50 of the optical recording medium 30 is irradiated with a laser beam L via a light incident plane 33a, Cu contained in the second L1 recording film 53a as a primary component and Si contained in the first L1 recording film 53b as a primary component are quickly fused or diffused and a region M where Cu and Si are mixed is formed, thereby forming a record mark M.

Similarly to the above, when the L0 layer 40 of the optical recording medium 30 is irradiated with a laser beam L via a light incident plane 33a, Cu contained in the second L0 recording film 43a as a primary component and Si contained in the first L0 recording film 43b as a primary component are quickly fused or diffused and a region M where Cu and Si are mixed is formed, thereby forming a record mark M.

Since the reflection coefficient of the region of the L0 layer 40 or the L1 layer 50 where the record mark M is formed in this manner is greatly different from that of a region of the L0 layer 40 or the L1 layer 50 surrounding the region where the record mark M is formed, it is possible to obtain a high reproduced signal (C/N ratio) by projecting the laser beam L onto the L0 layer 40 or the L1 layer 50 and detecting the amount of the laser beam L reflected by the L0 layer 40 or the L1 layer 50.

According to this embodiment, since the amounts of nitrogen added to the fourth dielectric film 42 and the third dielectric film 44 included in the L0 layer 40 are determined so that the refractive indexes n of the fourth dielectric film 42 and the third dielectric film 44 are sufficiently high and the extinction coefficients k thereof are sufficiently low with respect to the laser beam L having a wavelength of 405 nm, when data are recorded in the L0 layer 40 of the optical recording medium 10, it is possible to decrease the energy of the laser beam L absorbed in the fourth dielectric film 42 and the third dielectric film 44 and improve the recording sensitivity of the L0 layer 40 of the optical recording medium 10. On the other hand, when data are reproduced from the L0 layer 40 of the optical recording medium 10, it is possible to increase modulation, namely, the difference in reflection coefficients between a region of the L0 layer 40 where a record mark is formed and a region thereof where no record mark is formed and prevent the reflective coefficient of the L0 layer 40 from decreasing.

Further, according to this embodiment, since the amounts of nitrogen added to the second dielectric film 52 and the first dielectric film 54 included in the L1 layer 50 are determined so that the refractive indexes n of the second dielectric film 52 and the first dielectric film 54 are sufficiently high and the extinction coefficients *k* thereof are sufficiently low with respect to the laser beam L having a wavelength of 405 nm, when data are recorded in the L1 layer 50 of the optical recording medium 10, it is possible to decrease the energy of the laser beam L absorbed in the second dielectric film 52 and the first dielectric film 54 and improve the recording sensitivity of the L1 layer 50 of the optical recording medium 10. On the other hand, when data are reproduced from the L1 layer 50 of the optical recording medium 10, it is possible to increase modulation, namely, the difference in reflection coefficients between a region of the L1 layer 50 where a record mark is formed and a region thereof where no record mark is formed and prevent the reflective coefficient of the L1 layer 50 from decreasing.

Furthermore, according to this embodiment, since the amounts of nitrogen added to the second dielectric film 52 and the first dielectric film 54 included in the L1 layer 50 are determined so that the refractive indexes *n* of the second dielectric film 52 and the first dielectric film 54 are sufficiently high and the extinction coefficients *k* thereof are sufficiently low with respect to the laser beam L having a wavelength of 405 nm, the light transmittance of the L1 layer 50 can be increased and it is therefore possible to markedly improve the data recording characteristic in the L0 layer 40 and the data reproducing characteristic from the L0 layer 40.

### WORKING EXAMPLES AND COMPARATIVE EXAMPLES

Hereinafter, working examples will be set out in order to further clarify the advantages of the present invention.

### Working Example 1

A disk-like polycarbonate substrate having a thickness of 1.1 mm and a diameter of 120 mm was first fabricated using an injection molding process.

The thus fabricated polycarbonate substrate was then set on a sputtering apparatus and a sputtering process was performed at a power of 800 W using a Ta₂O₅ target, thereby forming a dielectric layer having a thickness of 30 nm and containing Ta₂O₅ as a primary component on the surface of the polycarbonate substrate.

A mixed gas of argon gas and nitrogen gas was employed as a sputtering gas and samples #1-1 to #1-6 were fabricated to give their dielectric layers different nitrogen contents from each other by varying the flow rate of nitrogen from 0 to 35 SCCM.

The amount of nitrogen contained in the dielectric layer of each of the samples #1-1 to #1-6 was measured and the relationship between the composition of the mixed gas used as the sputtering gas and the amounts of nitrogen added to the dielectric layers of the samples #1-1 to #1-6 was determined.

The results of the measurement are shown in Table 1.

The amount of nitrogen added to each of the dielectric layer was obtained by multiplying the peak areas of the 4f peak of tantalum (peak position: about 28.2 to 37.4 eV), the 1s peak of oxygen (peak position: about 523 to 543 eV) and the 1s peak of nitrogen (peak position: about 390 to 410 eV) measured by the ESCA (Electron Spectroscopy for Chemical Analysis), namely, XPS (X-ray photoelectron spectroscopy) by the corresponding sensitivity factors of the peaks, namely, 0.596 of that of the 4f peak of tantalum, 2.994 of that of the 1s peak of oxygen and 4.505 of that of the 1s peak of nitrogen.

**Table 1**

| | Flow rate of Ar gas (sccm) | Flow rate of N₂ gas (sccm) | Amount of Nitrogen(atomic%) |
|---|---|---|---|
| Sample # 1-1 | 55 | 0 | 0 |
| Sample # 1-2 | 50 | 5 | 3.3 |
| Sample # 1-3 | 45 | 10 | 6.1 |
| Sample # 1-4 | 40 | 15 | 8.4 |
| Sample # 1-5 | 30 | 25 | 11.3 |
| Sample # 1-6 | 20 | 35 | 12.1 |

Then, a laser beam having a wavelength of 405 nm and a laser beam having a wavelength of 680 nm were projected onto each of the samples #1-1 to #1-6, whereby the refractive index *n* and the extinction coefficient *k* thereof were measured and the relationship between the amount (atomic %) of nitrogen added to the dielectric layers and the refractive index *n* of the dielectric layer and the relationship between the amount (atomic %) of nitrogen added to the dielectric layers and the extinction coefficient *k* of the dielectric layer were obtained.

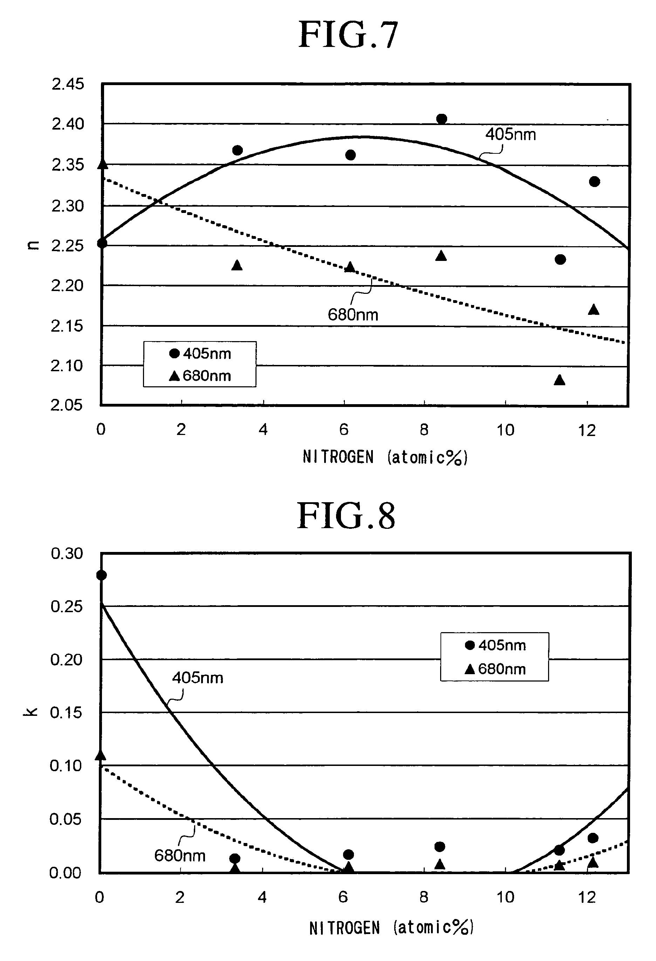

The thus obtained relationship between the amount (atomic %) of nitrogen added to the dielectric layers and the refractive index n of the dielectric layer is shown in Figure 7 and the relationship between the amount (atomic %) of nitrogen added to the dielectric layers and the extinction coefficient *k* of the dielectric layer is shown in Figure 8.

As shown in Figure 7, it was found that the refractive index *n* of the dielectric layer with respect to the laser beam having a wavelength of 680 nm decreased as the amount (atomic %) of nitrogen added to the dielectric layer containing Ta₂O₅ as a primary component was increased.

To the contrary, as shown in Figure 7, it was found that the refractive index *n* of the dielectric layer with respect to the laser beam having a wavelength of 405 nm increased as the amount (atomic %) of nitrogen added to the dielectric layer containing Ta₂O₅ as a primary component was increased but when the amount of the nitrogen added to the dielectric layer exceeded about 6 atomic %, it decreased as the amount (atomic %) of nitrogen added to the dielectric layer containing Ta₂O₅ as a primary component was increased.

On the other hand, as shown in Figure 8, it was found that when nitrogen was added to the dielectric layer containing Ta₂O₅ as a primary component, both the extinction coefficient *k* of the dielectric layer with respect to the laser beam having a wavelength of 405 nm and the extinction coefficient *k* of the dielectric layer with respect to the laser beam having a wavelength of 680 nm increased and further increased as the amount of nitrogen added to the dielectric layer was increased.

Further, as shown in Figure 8, it was found that both the extinction coefficient *k* of the dielectric layer with respect to the laser beam having a wavelength of 405 nm and the extinction coefficient *k* of the dielectric layer with respect to the laser beam having a wavelength of 680 nm were equal to zero when about 6 atomic % to about 10 atomic % of nitrogen was added to the dielectric layer but increased in accordance with increase in the amount of nitrogen added to the dielectric layer when it exceeded about 10 atomic %.

Moreover, as shown in Figure 8, it was found that the extinction coefficient *k* of the dielectric layer with respect to the laser beam having a wavelength of 405 nm markedly decreased if nitrogen was added to the dielectric layer.

Then, a laser beam was projected onto the samples #1-1 and #1-2 and the refractive index *n* and the extinction coefficient *k* of each dielectric layer were measured while varying the wavelength of the laser beam in the range between 350 nm and 800 nm, whereby the relationship between the wavelength of the laser beam and the refractive index *n* of the dielectric layers and the relationship between the wavelength of the laser beam and the extinction coefficient *k* of the dielectric layers were obtained.

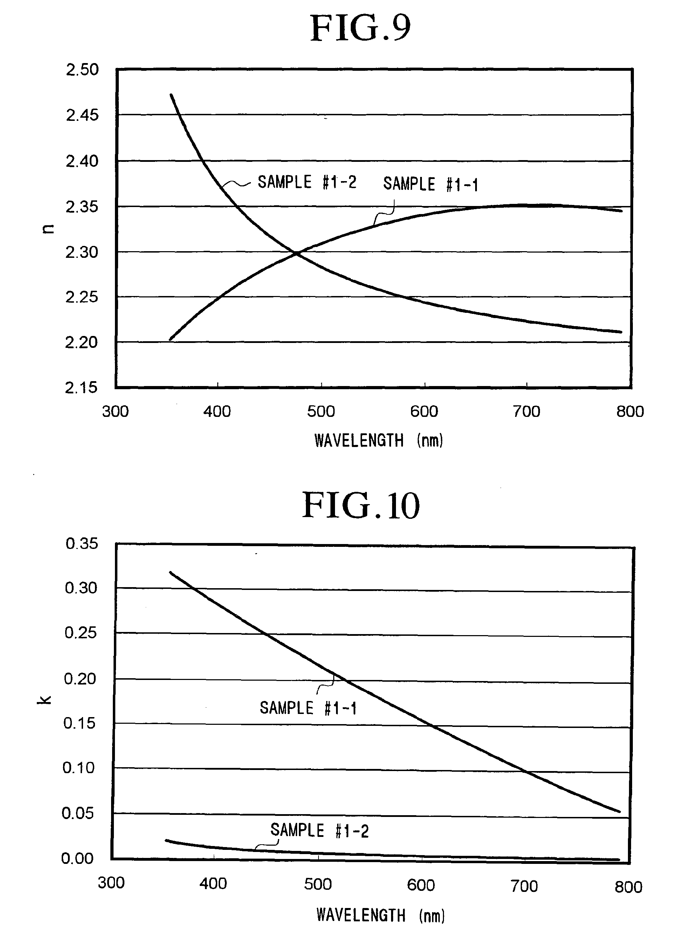

The result of measurement of the relationship between the wavelength of the laser beam and the refractive index *n* of the dielectric layers is shown in Figure 9 and the result of measurement of the relationship between the wavelength of the laser beam and the extinction coefficient *k* of the dielectric layers is shown in Figure 10.

As shown in Figure 9, it was found that the refractive index n of the sample #1-1 including the dielectric layer containing Ta₂O₅ as a primary component but no nitrogen as an additive decreased as the wavelength of the laser beam became shorter, while the refractive index *n* of the sample #1-2 including the dielectric layer containing Ta₂O₅ as a primary component and 3.3 atomic % of nitrogen as an additive increased as the wavelength of the laser beam became shorter and that the refractive index *n* of the sample #1-2 was higher than that of the sample #1-1 with respect to the laser beam having a wavelength equal to or shorter than about 470 nm.

Further, as shown in Figure 10, it was found that the extinction coefficient *k* of the sample #1-1 including the dielectric layer containing Ta₂O₅ as a primary component but no nitrogen as an additive increased substantially linearly as the wavelength of the laser beam became shorter, while the extinction coefficient *k* of the sample #1-2 including the dielectric layer containing Ta₂O₅ as a primary component and 3.3 atomic % of nitrogen as an additive was substantially constant even if the wavelength of the laser beam varied and that the extinction coefficient *k* of the sample #1-1 was higher than that of the sample #1-2 with respect to the laser beam having a wavelength of from 350 nm to 800 nm and the difference therebetween became larger as the wavelength of the laser beam became shorter.

### Working Example 2

A disk-like polycarbonate substrate having a thickness of 1.1 mm and a diameter of 120 mm was first fabricated using an injection molding process.

The thus fabricated polycarbonate substrate was then set on a sputtering apparatus and a sputtering process was performed at a power of 800 W using a TiO₂ target, thereby forming a dielectric layer having a thickness of 30 nm and containing TiO₂ as a primary component on the surface of the polycarbonate substrate.

A mixed gas of argon gas and nitrogen gas was employed as a sputtering gas and samples #2-1 to #2-8 were fabricated to give their dielectric layers different nitrogen contents from each other by varying the flow rate of nitrogen from 0 to 35 SCCM.

The amount of nitrogen contained in the dielectric layer of each of the sample #2-1 to the sample #2-6 was measured and the relationship between the composition of the mixed gas used as the sputtering gas and the amounts of nitrogen added to the dielectric layers of the sample #2-1 to the sample #2-6 was determined.

The results of the measurement are shown in Table 2.

The amount of nitrogen added to each of the dielectric layers was obtained by multiplying the peak areas of the 2p peak of titanium (peak position: about 443.8 to 473.8 eV), the 1s peak of oxygen (peak position: about 523 to 543 eV) and the 1s peak of nitrogen (peak position: about 390 to 410 eV) measured by ESCA (Electron Spectroscopy for Chemical Analysis), namely, XPS (X-ray photoelectron spectroscopy) by the corresponding sensitivity factors of the peaks, namely, 1.703 of that of the 2p peak of titanium, 2.994 of that of the 1s peak of oxygen and 4.505 of that of the 1s peak of nitrogen.

**Table 2**

| | Flow rate of Ar gas (sccm) | Flow rate of N₂ gas (sccm) | Amount of Nitrogen(atomic%) |
|---|---|---|---|
| Sample #2-1 | 55 | 0 | 0 |
| Sample #2-2 | 52 | 3 | 1.7 |
| Sample #2-3 | 50 | 5 | 2.9 |
| Sample #2-4 | 47 | 8 | 3.1 |
| Sample #2-5 | 45 | 10 | 3.3 |
| Sample #2-6 | 40 | 15 | 3.9 |
| Sample #2-7 | 30 | 25 | 5.1 |
| Sample #2-8 | 20 | 35 | 5.7 |

Then, a laser beam having a wavelength of 405 nm and a laser beam having a wavelength of 680 nm were projected onto each of the samples #2-1 to #2-8, whereby the refractive index *n* and the extinction coefficient *k* thereof were measured and the relationship between the amount (atomic %) of nitrogen added to the dielectric layers and the refractive index *n* of the dielectric layer and the relationship between the amount (atomic %) of nitrogen added to the dielectric layers and the extinction coefficient *k* of the dielectric layers were obtained.

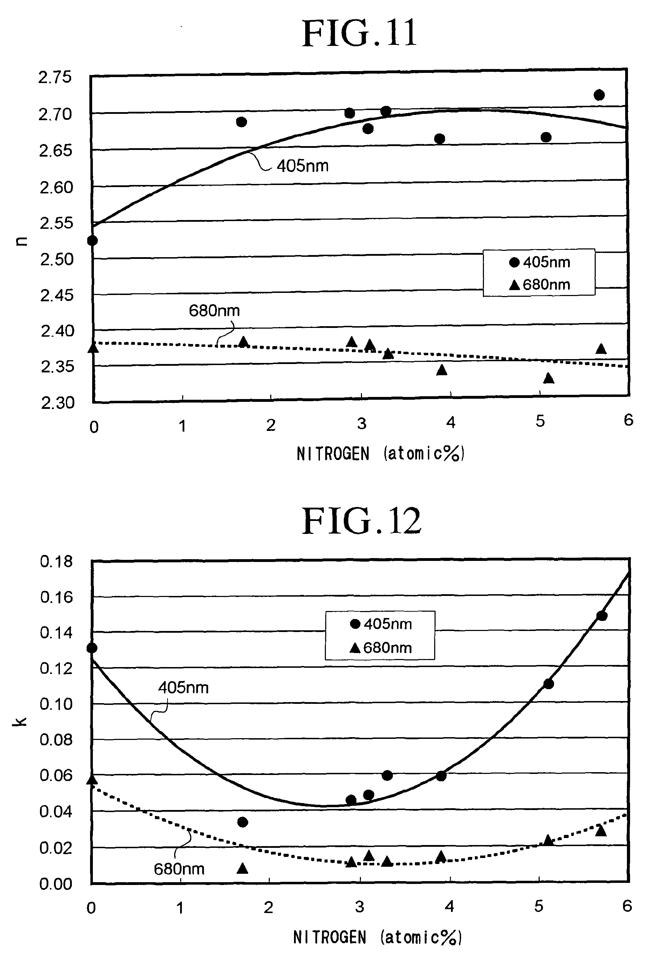

The thus obtained relationship between the amount (atomic %) of nitrogen added to the dielectric layers and the refractive index *n* of the dielectric layers is shown in Figure 11 and the relationship between the amount (atomic %) of nitrogen added to the dielectric layers and the extinction coefficient *k* of the dielectric layers is shown in Figure 12.

As shown in Figure 11, it was found that the refractive index *n* of the dielectric layer with respect to the laser beam having a wavelength of 405 nm increased as the amount (atomic %) of nitrogen added to the dielectric layer containing TiO₂ as a primary component was increased but when the amount of the nitrogen to the dielectric layer exceeded about 4.5 atomic %, it gradually decreased as the amount (atomic %) of nitrogen added to the dielectric layer containing TiO₂ as a primary component was increased.

To the contrary, as shown in Figure 11, it was found that the refractive index *n* of the dielectric layer with respect to the laser beam having a wavelength of 680 nm was substantially constant even if nitrogen was added to the dielectric layer containing TiO₂ as a primary component.

On the other hand, as shown in Figure 12, it was found that the extinction coeffilcient *k* of the dielectric layer with respect to the laser beam having a wavelength of 405 nm decreased as the amount of nitrogen added to the dielectric layer was increased but that when the amount of nitrogen exceeded about 2.7 atomic %, the extinction coefficient *k* thereof increased.

Further, as shown in Figure 12, it was found that the extinction coefficient k of the dielectric layer with respect to the laser beam having a wavelength of 680 nm decreased as the amount of nitrogen added to the dielectric layer was increased but that when the amount of nitrogen exceeded about 3 atomic %, the extinction coefficient *k* thereof increased.

Then, a laser beam was projected onto the samples #2-1 and #2-3 and the refractive index *n* and the extinction coefficient *k* of the dielectric layers were measured while varying the wavelength of the laser beam in the range between 350 nm and 800 nm, whereby the relationship between the wavelength of the laser beam and the refractive index *n* of the dielectric layer and the relationship between the wavelength of the laser beam and the extinction coefficient *k* of the dielectric layer were determined.

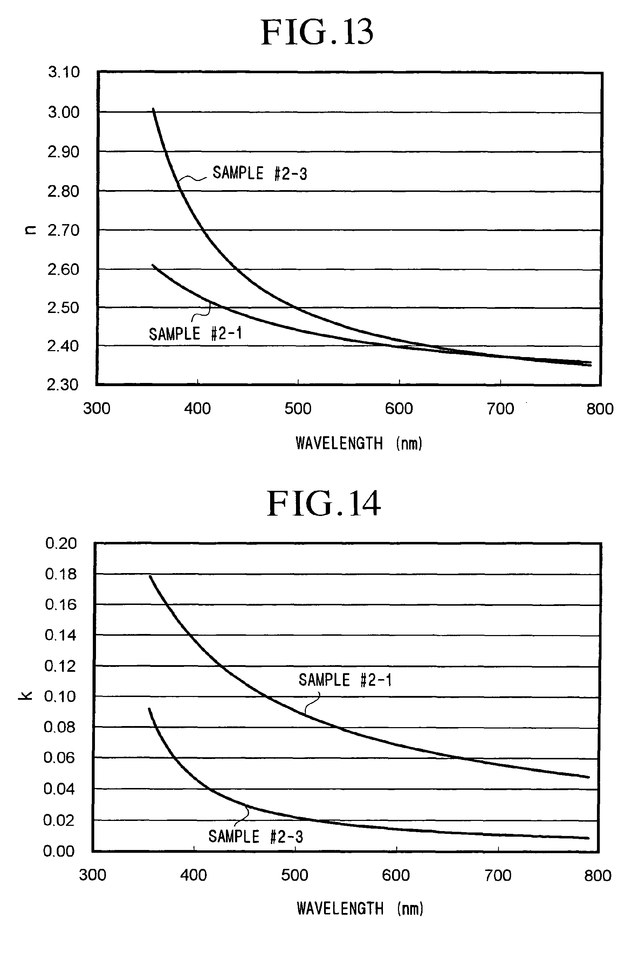

The result of measurement of the relationship between the wavelength of the laser beam and the refractive index *n* of the dielectric layer is shown in Figure 13 and the result of measurement of the relationship between the wavelength of the laser beam and the extinction coefficient *k* of the dielectric layer is shown in Figure 14.

As shown in Figure 13, it was found that the refractive index n of the sample #2-1 including the dielectric layer containing TiO₂ as a primary component but no nitrogen as an additive did not greatly change even if the wavelength of the laser beam became shorter, while the refractive index *n* of the sample #2-3 including the dielectric layer containing TiO₂ as a primary component and 2.9 atomic % of nitrogen as an additive increased as the wavelength of the laser beam became shorter and the refractive index *n* thereof was very large with respect to the laser beam in the blue wavelength band.

Further, as shown in Figure 14, it was found that both the extinction coefficient *k* of the sample #2-1 including the dielectric layer containing TiO₂ as a primary component but no nitrogen as an additive and the extinction coefficient *k* of the sample #2-3 including the dielectric layer containing TiO₂ as a primary component and 2.9 atomic % of nitrogen as an additive increased as the wavelength of the laser beam became shorter and that the extinction coefficient *k* of the sample #2-1 was larger than that of the sample #2-3 irrespective of the wavelength of the laser beam.

### Working Example 3

An optical recording medium sample #3-1 was fabricated in the following manner.

A disk-like polycarbonate substrate having a thickness of 1.1 mm and a diameter of 120 mm was first fabricated using an injection molding process.

Then, the polycarbonate substrate was set on a sputtering apparatus and a reflective film containing Ag as a primary component and having a thickness of 100 nm, a second dielectric film containing TiO₂ as a primary component and 2.9 atomic % of nitrogen as an additive and having a thickness of 17 nm, a second recording film containing Cu as a primary component and 23 atomic % of Al and 13 atomic % of Au as additives and having a thickness of 5 nm, a first recording film containing Si as a primary component and having a thickness of 5 nm, a first dielectric film containing TiO₂ as a primary component and 2.9 atomic % of nitrogen as an additive and having a thickness of 17 nm were sequentially formed on the thus fabricated polycarbonate substrate using the sputtering process.

Further, the first dielectric film was coated using the spin coating method with a resin solution prepared by dissolving acrylic ultraviolet curing resin in a solvent to form a coating layer and the coating layer was irradiated with ultraviolet rays, thereby curing the acrylic ultraviolet curing resin to form a protective layer having a thickness of 100 µm.

Furthermore, an optical recording medium sample #3-2 was fabricated in the following manner.

A disk-like polycarbonate substrate having a thickness of 1.1 mm and a diameter of 120 mm was first fabricated using an injection molding process.

Then, the polycarbonate substrate was set on the sputtering apparatus and a reflective film containing Ag as a primary component and having a thickness of 100 nm, a second dielectric film containing TiO₂ as a primary component and having a thickness of 20nm, a second recording film containing Cu as a primary component and 23 atomic % of Al and 13 atomic % of Au as additives and having a thickness of 5 nm, a first recording film containing Si as a primary component and having a thickness of 5 nm, a first dielectric film containing TiO₂ as a primary component and 2.9 atomic % of nitrogen as an additive and having a thickness of 23 nm were sequentially formed on the thus fabricated polycarbonate substrate using the sputtering process.

Further, the first dielectric film was coated using the spin coating method with a resin solution prepared by dissolving acrylic ultraviolet curing resin in a solvent to form a coating layer and the coating layer was irradiated with ultraviolet rays, thereby curing the acrylic ultraviolet curing resin to form a protective layer having a thickness of 100 µm.

Then, a laser beam was projected onto the optical recording medium samples #3-1 and #3-2 under the recording conditions at which the highest modulation could be obtained, whereby data were recorded therein and the modulation was measured.

The results of measurement of the highest modulation and the power of the laser beam by which the highest modulation was obtained are shown in Table 3.

**Table 3**

| | Modulation(%) | Power of laser beam (mW) |
|---|---|---|
| Sample #3-1 | 60 | 8.2 |
| Sample #3-2 | 52 | 11.0 |

As shown in Table 3, it was found that higher modulation was obtained with a laser beam having lower power in the optical recording medium sample #3-1 in which nitrogen was added to the first dielectric film and the second dielectric film than was obtained in the optical recording medium sample #3-2 in which no nitrogen was added to the first dielectric film and the second dielectric film.

Thus it was found that the modulation and the recording sensitivity of an optical recording medium can be improved by adding nitrogen to a first dielectric layer and a second dielectric layer.

The present invention has thus been shown and described with reference to specific embodiments and working examples. However, it should be noted that the present invention is in no way limited to the details of the described arrangements but changes and modifications may be made without departing from the scope of the appended claims.

For example, each of the first dielectric layer 15 and the second dielectric layer 13 contains nitrogen as an additive in the embodiment shown in Figures 2 and 3 and the embodiment shown in Figure 4 and each of the fourth dielectric film 42 and the third dielectric film 44 included in the L0 layer 40 and the second dielectric film 52 and the first dielectric film 54 contains nitrogen as an additive. However, it is preferable, but not absolutely necessary, for all dielectric layers or dielectric films formed in an optical recording medium to contain nitrogen as an additive. It is sufficient for at least a dielectric layer or a dielectric film on the side of a light incidence plane with respect to a recording layer to contain nitrogen as an additive and it is preferable for a dielectric layer or a dielectric film on the side of the light incidence plane with respect to an associated recording layer to contain nitrogen as an additive.

Furthermore, in the embodiment shown in Figures 2 and 3, although the first recording film 21 and the second recording film 22 are formed in contact with each other, it is not absolutely necessary to form the first recording film 21 and the second recording film 22 in contact with each other but it is sufficient for the second recording film 22 to be so located in the vicinity of the first recording film 21 as to enable formation of a mixed region including the primary component element of the first recording film 21 and the primary component element of the second recording film 22 when the region is irradiated with a laser beam. Further, one or more other layers such as a dielectric layer may be interposed between the first recording film 21 and the second recording film 22.

Further, each of the optical recording media 10 in the embodiment shown in Figure 2 and 3 and in the embodiment shown in Figure 4 includes the reflective layer 12, and the L0 layer 40 and the L1 layer 50 respectively include the reflective film 41 and the reflective film 51. However, in the case where the diffee3nce between the level of the laser beam reflected by a region where a record mark M is formed and that by a blank region where no record mark M is formed is considerably large, the reflective layer 12, the reflective film 41 and the reflective film 51 may be omitted.

According to the present invention, it is possible to provide an optical recording medium which can exhibit excellent optical characteristics with respect to a laser beam of desired wavelength used for recording data and reproducing data and a method for manufacturing the same.

Further, according to the present invention, it is possible to provide an optical recording medium which can exhibit excellent optical characteristics with respect to a laser beam in the blue wavelength band and used for recording data and reproducing data and a method for manufacturing the same.

## Claims

1. An optical recording medium comprising at least one recording layer and a dielectric layer formed in the vicinity of the at least one recording layer, the dielectric layer containing an oxide as a primary component and being added with nitrogen.

2. An optical recording medium in accordance with Claim 1, wherein the dielectric layer contains an oxide selected from a group consisting of Ta₂O₅ and TiO₂ as a primary component.

3. An optical recording medium in accordance with Claim 1 or 2, wherein the at least one recording layer is constituted so that data can be recorded therein by a laser beam having a wavelength of 380 nm to 450 nm.

4. An optical recording medium in accordance with any one of Claims 1 to 3, wherein the at least one recording layer includes a first recording film containing an element selected from a group consisting of Si, Ge, Sn, Mg, C, Al, Zn, In, Cu, Ti and Bi as a primary component and a second recording film containing an element selected from a group consisting of Cu, Al, Zn and Ag and different from the element contained as a primary component in the first recording film as a primary component.

5. An optical recording medium in accordance with Claim 4, wherein the second recording film is formed so as to be in contact with the first recording film.

6. An optical recording medium in accordance with Claim 4 or 5, wherein the first recording film contains an element selected from a group consisting of Si, Ge and Sn as a primary component.

7. An optical recording medium in accordance with any one of Claims 4 to 6, wherein the second recording film contains Cu as a primary component.

8. An optical recording medium in accordance with any one of Claims 4 to 7, wherein the second recording film is added with an element selected from the group consisting of Cu, Al, Zn, Ag, Mg, Sn, Au, Ti and Pd and different from the element contained in the first recording film as a primary component.

9. An optical recording medium in accordance with any one of Claims 1 to 8 which comprises two or more recording layers spaced apart from each other and dielectric layers each formed in the vicinity of one the recording layers, at least the dielectric layer formed in the vicinity of the recording layer closest to a light incidence plane containing an oxide as a primary component and nitrogen as an additive.

10. A method for manufacturing an optical recording medium comprising at least one recording layer and a dielectric layer provided in the vicinity of the at least one recording layer, the method for manufacturing an optical recording medium comprising a step of forming the dielectric layer by vapor-phase growth of an oxide in an atmosphere of a mixed gas containing nitrogen gas.

11. A method for manufacturing an optical recording medium in accordance with Claim 10, which comprises a step of forming the dielectric layer by a sputtering process so as to contain an oxide as a primary component and nitrogen as an additive.

12. A method for manufacturing an optical recording medium in accordance with Claim 10 or 11, wherein the oxide is selected from a group consisting of Ta₂O₅ and TiO₂.
